# EUROPEAN PATENT APPLICATION

(11) **EP 4 541 577 A1**
(43) Date of publication of application: **23.04.2025**
(21) Application number: 23823886.9
(22) Date of filing: 12.06.2023
(51) Int. Cl.: B32B 5/18, B32B 27/00, F24F 1/0087, F24F 1/037, F24F 6/04

(54) **HUMIDIFICATION LAMINATE AND HUMIDIFIER**

(30) Priority: 15.06.2022 JP 2022096877
(71) Applicant: Daicel Corporation, Osaka-shi, Osaka 530-0011 (JP); DAIKIN INDUSTRIES, LTD., Osaka-shi, Osaka 530-0001 (JP)
(72) Inventor: MAETANI, Shinji, Tokyo 108-8230 (JP); NISHIO, Naotaka, Tokyo 108-8230 (JP); SAKAKIBARA, Takahiro, Tokyo 108-8230 (JP); MIZUTA, Tomoya, Tokyo 108-8230 (JP); SAKATA, Yumi, Tokyo 108-8230 (JP); NAKAZAWA, Takema, Osaka-Shi, Osaka 530-0001 (JP); OKUBO, Eisaku, Osaka-Shi, Osaka 530-0001 (JP); TANAKA, Hidekazu, Osaka-Shi, Osaka 530-0001 (JP)
(74) Representative: Grünecker Patent- und Rechtsanwälte PartG mbB
(86) International application number: PCT/JP2023/021723
(87) International publication number: WO 2023/243596

(57) **Abstract**

Provided is a laminate for humidification that can exhibit sufficient moisture permeability over a long period of time and can suppress scattering of impurities such as saprophytes or scale components. A laminate for humidification 1 includes a porous reinforcing material 11, and a non-porous membrane 12 that is laminated on at least one surface of the porous reinforcing material 11 and functions as a moisture-permeable membrane, wherein the non-porous membrane 12 contains a thermoplastic resin including a cationic moiety or an anionic moiety. It is preferable that the non-porous membrane 12 is disposed on a liquid water side of the porous reinforcing material 11, and is used to absorb liquid water and release the liquid water into air. It is preferable that the cationic moiety contains a group containing an ammonium ion or a group capable of forming an ammonium ion.

## Description

### Technical Field

The present disclosure relates to a laminate for humidification and a humidifier. The present application claims priority to Japanese Patent Application No. 2022-096877 filed in Japan on June 15, 2022, the content of which is incorporated herein by reference.

### Background Art

In relation to the recent epidemic of infectious diseases, it is now required not only to perform ventilation but also to maintain the relative humidity at a certain level or more for elimination of viruses. For example, a moisture-permeable membrane-type humidifier is known as a humidifier that achieves both ventilation and humidification.

A laminate (sheet) made of a porous base material and a hydrophilic non-woven fabric has been used as a moisture-permeable layer of a known moisture-permeable membrane-type humidifier, and it is known that the laminate has pores for water vapor permeation.

However, there is a known problem that, in such a moisture-permeable layer, the pores of the laminate are filled with a scale component generated in the humidifier, and the function of the moisture-permeable layer deteriorates with long-term use of the humidifier.

As a method for preventing adhesion and deposition of such a scale component, for example, Patent Document 1 discloses a technique in which a filter portion is coated with a material containing a hydrophilic cation, and thus the cationic moiety repels the scale component to prevent adhesion and deposition of the scale component.

### Citation List

### Patent Document

Patent Document 1: JP 2011-2126 A

### Summary of Invention

### Technical Problem

However, the invention disclosed in Patent Document 1, which is directed to a rotary humidifier using a filter, requires formation of a water layer on the filter for humidification, and the humidifier poses a problem that saprophytes or scale components are scattered from the water layer together with water vapor.

A moisture-permeable membrane-type humidifier including a moisture-permeable membrane is effective to prevent scattering of such microbes or scale components.

Thus, an object of the present disclosure is to provide a laminate for humidification that can exhibit sufficient moisture permeability for a long period of time and can prevent scattering of impurities such as saprophytes or scale components.

### Solution to Problem

As a result of intensive studies to achieve the above object, the inventors of the present disclosure have found that a laminate for humidification including a porous reinforcing material and a non-porous membrane laminated on at least one surface of the porous reinforcing material and functioning as a moisture-permeable membrane, the non-porous membrane containing a thermoplastic resin including a cationic moiety or an anionic moiety, can exhibit sufficient moisture permeability for a long period of time and can prevent scattering of impurities such as saprophytes or scale components. The present disclosure relates to what has been completed based on these findings.

Accordingly, the present disclosure provides a laminate for humidification, the laminate including a porous reinforcing material, and a non-porous membrane that is laminated on at least one surface of the porous reinforcing material and functions as a moisture-permeable membrane, wherein the non-porous membrane contains a thermoplastic resin including a cationic moiety or an anionic moiety.

Since the laminate for humidification of the present disclosure has a non-porous membrane that functions as a moisture-permeable membrane, the laminate has excellent moisture permeability and can suppress scattering of saprophytes, scale components, or the like. In addition, since the thermoplastic resin has a cationic moiety or an anionic moiety, a repulsive force is generated between the cationic moiety or the anionic moiety and the scale components, and thus adhesion and deposition of the scale components on the moisture-permeable layer can be suppressed, and the moisture-permeable layer can continuously exhibit moisture permeability over a long period of time.

Preferably, the non-porous membrane is disposed on a liquid water side of the porous reinforcing material and is used to absorb liquid water and release the liquid water into air.

Preferably, the cationic moiety contains a group containing an ammonium ion or a group capable of forming an ammonium ion. When the cationic moiety contains a group containing an ammonium ion or a group capable of forming an ammonium ion, the non-porous membrane can exhibit a bactericidal action, and thus adhesion and deposition of saprophytes or the like can be further suppressed.

Preferably, the thermoplastic resin has a hydrophilic moiety, and the hydrophilic moiety contains a constituent unit represented by Formula (1) described below. When the non-porous membrane has the hydrophilic moiety of the aforementioned constituent unit, a water-conducting path can be formed in the non-porous membrane, and moisture permeability can be easily exhibited. 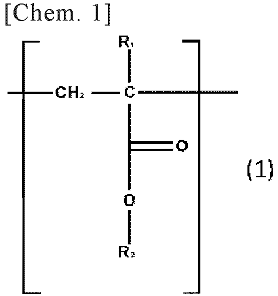 (R₁ and R₂ independently represent a hydrogen atom or a methyl group.)

Preferably, the thermoplastic resin has a hydrophobic moiety, and the hydrophobic moiety contains a constituent unit represented by Formula (2) and/or Formula (3) described below. When the non-porous membrane has the hydrophobic moiety of the aforementioned constituent unit, a water-conducting path can be formed in the non-porous membrane, and moisture permeability can be easily exhibited. 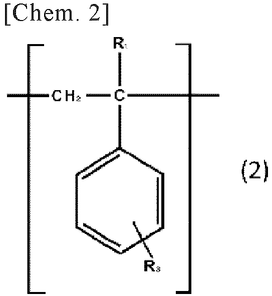 (R₁ represents a hydrogen atom or a methyl group, and R₃ represents a hydrogen atom or an alkyl group having from 1 to 2 carbons.) 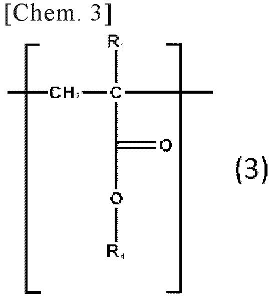 (R₁ represents a hydrogen atom or a methyl group, and R₄ represents a branched alkyl group having 3 or more carbons.)

The non-porous membrane preferably contains a preservative. Incorporation of a preservative makes it possible to suppress propagation of saprophytes and easily suppress scattering of saprophytes.

Preferably, the preservative has an average particle size larger than a thickness of the non-porous membrane. When the average particle size of the preservative is larger than the thickness of the non-porous membrane, the preservative can function as an anti-blocking agent.

The non-porous membrane preferably contains an anti-blocking agent.

Preferably, the anti-blocking agent has an average particle size larger than the thickness of the non-porous membrane. The above-described configuration makes it possible to prevent adhesion between non-porous membranes when they come into contact with each other, and moisture permeability can be easily exhibited over a longer period of time.

The non-porous membrane preferably contains a leveling agent.

In the laminate for humidification, preferably, the non-porous membrane is coated to cover at least one surface of the porous reinforcing material.

The present disclosure also provides a humidifier including a plurality of bag-shaped water-holding containers each including the laminate for humidification and a frame which are bonded together.

The present disclosure also provides an air conditioner including the humidifier.

The present disclosure also provides a ventilator including the humidifier.

The present disclosure also provides an air purifier including the humidifier.

### Advantageous Effects of Invention

The laminate for humidification of the present disclosure can exhibit sufficient moisture permeability over a long period of time and can suppress scattering of impurities such as saprophytes or scale components. Thus, the laminate for humidification of the present disclosure is preferably used in a moisture-permeable membrane-type humidifier.

### Brief Description of Drawings

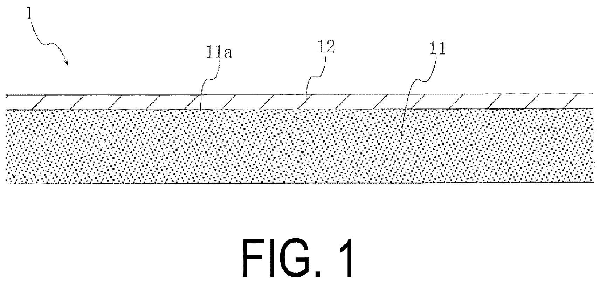

FIG. 1 is a cross-sectional schematic view illustrating an embodiment of a laminate for humidification of the present disclosure.

### Description of Embodiments

A laminate for humidification according to an embodiment of the present disclosure includes at least a porous reinforcing material and a non-porous membrane provided on at least one surface of the porous reinforcing material. The non-porous membrane may be provided on one surface or both surfaces of the porous reinforcing material. The laminate for humidification may have a structure in which the non-porous membrane is sandwiched between two porous reinforcing materials. That is, the porous reinforcing material may be provided on both surfaces of the non-porous membrane. In this case, the two porous reinforcing materials may be the same porous reinforcing material, or may be porous reinforcing materials having different materials, thicknesses, or the like.

FIG. 1 is a sectional schematic view illustrating an embodiment of the laminate for humidification of the present disclosure. A laminate for humidification 1 includes a porous reinforcing material 11 and a non-porous membrane 12 provided on one surface 11a of the porous reinforcing material 11.

### <Non-porous membrane>

The non-porous membrane contains a thermoplastic resin, and the thermoplastic resin has a cationic moiety or an anionic moiety. Thus, the non-porous membrane has the cationic moiety or the anionic moiety. When the non-porous membrane is used in a region where a cationic scale component is likely to be generated from metal ions as a main raw material, or when water containing a large amount of the cationic scale component is used, the non-porous membrane preferably has a cationic moiety. When the non-porous membrane is used in a region where an anionic scale component is likely to be generated from silica or the like as a main raw material, or when water containing a large amount of the anionic scale component is used, the non-porous membrane preferably has an anionic moiety. The above-described configuration enables the non-porous membrane to exhibit a repulsive force against the scale components, and adhesion and deposition of the scale components onto the non-porous membrane can be suppressed.

The non-porous membrane is a moisture-permeable membrane, and the thermoplastic resin preferably has a hydrophilic moiety to absorb moisture in the non-porous membrane. The thermoplastic resin preferably has a hydrophobic moiety to form a water-conducting path in the non-porous membrane. Thus, the thermoplastic resin preferably has both a hydrophilic moiety and a hydrophobic moiety. It is presumed that when the non-porous membrane has a structure in which the hydrophilic moiety and the hydrophobic moiety are phase-separated, the hydrophilic moiety functions as a water-conducting path, and a larger amount of water vapor can be permeated, whereby more excellent moisture permeability is achieved.

Examples of the thermoplastic resin include acrylic resins, cellulose resins, polyester resins such as polybutylene terephthalate, polyether resins, polyurethane resins, polyvinyl chloride resins, polyethylene, polystyrene resins, polyamide resins, polyacetal resins, polycarbonate resins, polyphenylene sulfide resins, polyether ether ketone, polyimide resins, polytetrafluoroethylene resins, polycaprolactone, and polylactic acid.

Since the thermoplastic resin preferably has a hydrophilic moiety, a hydrophobic moiety, and a cationic moiety or an anionic moiety as described above, the thermoplastic resin is preferably a thermoplastic copolymer containing different monomer components.

The hydrophilic moiety is preferably composed of a unit of a monomer (a) containing a hydrophilic functional group in a side chain (hereinafter referred to as monomer (a)) among the constituent units of the copolymer. The hydrophobic moiety is preferably composed of a unit of a monomer (b) containing a hydrophobic functional group in a side chain (hereinafter referred to as monomer (b)). The hydrophilic moiety and the hydrophobic moiety are preferably formed in the copolymer. In the non-porous membrane, the copolymer may retain a core-shell structure in which a hydrophobic moiety is formed inside and a hydrophilic moiety is formed outside. In this case, the hydrophilic moiety and the hydrophobic moiety may be formed by a core portion and a shell portion of two or more adjacent copolymers. The copolymer may have a core-shell structure before formation of the non-porous membrane, and may not retain the core-shell structure at the time of forming the non-porous membrane.

The copolymer preferably contains a structural unit derived from the monomer (a) as a portion constituting the hydrophilic moiety. Examples of the monomer (a) include a glycidyl group-containing monomer, a hydrolyzable silyl group-containing monomer, an acetoacetyl group-containing monomer, a hydroxyl group-containing monomer, and a carboxy group-containing monomer. Among them, the monomer (a) is preferably a carboxy group-containing monomer, methyl (meth)acrylate, and a monomer having a cationic functional group and a monomer having an anionic functional group, which will be described below. One type of the aforementioned monomers (a) may be used alone, or two or more types thereof may be used in combination. In the present specification, "(meth)acryl" represents at least one of "acryl" and "methacryl".

Examples of the glycidyl group-containing monomer include glycidyl (meth)acrylate and glycidyl (meth)allyl ether.

Examples of the hydrolyzable silyl group-containing monomer include vinyl silyl group-containing monomers such as vinyltrimethoxysilane, vinyltriethoxysilane, vinyltris(β-methoxyethoxy)silane, and vinylmethyldimethoxysilane; and (meth)acryloxy silyl group-containing monomers such as γ-(meth)acryloxypropyltrimethoxysilane, γ-(meth)acryloxypropylmethyldimethoxysilane, γ-(meth)acryloxypropyltriethoxysilane, and γ-(meth)acryloxypropylmethyldiethoxysilane.

Examples of the acetoacetyl group-containing monomer include diacetoacetic acid allyl ester, acetoacetoxyethyl (meth)acrylate, acetoacetoxyethyl crotonate, acetoacetoxypropyl (meth)acrylate, acetoacetoxypropyl crotonate, and 2-cyanoacetoacetoxyethyl (meth)acrylate.

Examples of the hydroxyl group-containing monomer include hydroxyl group-containing (meth)acrylates such as 2-hydroxyethyl (meth)acrylate, hydroxypropyl (meth)acrylate, and 4-hydroxybutyl (meth)acrylate.

Examples of the carboxy group-containing monomer include crotonic acid, maleic acid, acid anhydride monomers such as maleic anhydride, fumaric acid, citraconic acid, glutaconic acid, itaconic acid, acrylamide N-glycolic acid, cinnamic acid, and (meth)acrylate.

The monomer (a) is particularly preferably methyl (meth)acrylate and/or (meth)acrylate, that is, the hydrophilic moiety preferably has a constituent unit represented by Formula (1) described below. 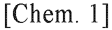 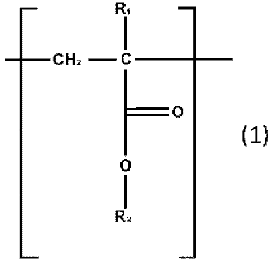 (R₁ and R₂ each independently represent a hydrogen atom or a methyl group.)

The content proportion of the monomer (a) is preferably from 20 mol% to 70 mol%, more preferably from 30 mol% to 70 mol%, and still more preferably from 40 mol% to 60 mol% relative to the entire monomer components constituting the copolymer. Adjusting the content proportion of the monomer (a) within this range makes it possible to form a hydrophilic moiety in the non-porous membrane to easily form a water-conducting path, and the non-porous membrane has more excellent moisture permeability.

The copolymer preferably contains a structural unit derived from the monomer (b) as a portion constituting the hydrophobic moiety. The monomer (b) is not particularly limited, but preferably contains a hydrocarbon group having 2 or more carbons. More preferred examples of the monomer (b) include (meth)acrylic acid esters having a hydrocarbon group having 2 or more carbons. One type of the aforementioned monomers (b) may be used alone, or two or more types thereof may be used in combination.

Examples of the hydrocarbon group having 2 or more carbons include an aliphatic hydrocarbon group, an alicyclic hydrocarbon group, an aromatic hydrocarbon group, and a group in which two or more of these groups are bound.

Examples of the aliphatic hydrocarbon group include an alkyl group, an alkenyl group, and an alkynyl group. Examples of the alkyl group include linear or branched alkyl groups such as an ethyl group, a propyl group, an isopropyl group, a butyl group, an isobutyl group, a hexyl group, an octyl group, an isooctyl group, a decyl group, a dodecyl group, and a stearyl group. Examples of the alkenyl group include linear or branched alkenyl groups such as a vinyl group, an allyl group, a methallyl group, a 1-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, and a 5-hexenyl group. Examples of the alkynyl group include linear or branched alkynyl groups such as an ethynyl group and a propynyl group.

Examples of the alicyclic hydrocarbon group include cycloalkyl groups having from 3 to 12 carbons, such as a cyclopropyl group, a cyclobutyl group, a cyclopentyl group, a cyclohexyl group, and a cyclododecyl group; cycloalkenyl groups having from 3 to 12 carbons, such as a cyclohexenyl group; and bridged cyclic hydrocarbon groups having from 4 to 15 carbons, such as a bicycloheptanyl group and a bicycloheptenyl group.

Examples of the aromatic hydrocarbon group include aryl groups having from 6 to 14 carbons (in particular, aryl groups having from 6 to 10 carbons), such as a phenyl group and a naphthyl group.

The hydrocarbon group having 2 or more carbons is preferably an aliphatic hydrocarbon group and an aromatic hydrocarbon group, and more preferably a linear or branched alkyl group and an aromatic hydrocarbon group.

In particular, the monomer (b) is preferably, for example, a monomer capable of forming a constituent unit described in the following Formula (2) and/or the following Formula (3). That is, the hydrophobic moiety preferably contains a constituent unit represented by the following Formula (2) and/or the following Formula (3). 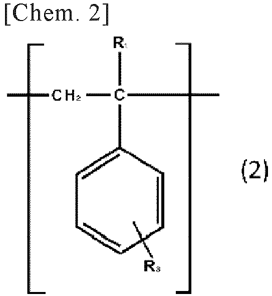 (R₁ represents a hydrogen atom or a methyl group, and R₃ represents a hydrogen atom or an alkyl group having from 1 to 2 carbons.) 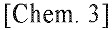 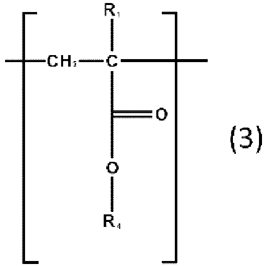 (R₁ represents a hydrogen atom or a methyl group, and R₄ represents a branched alkyl group having 3 or more carbons.)

In Formula (2), R₃ may be bonded at any position of the hydrocarbon constituting the benzene ring, and examples of the monomer capable of forming the constituent unit represented by Formula (2) include styrene, α-methylstyrene, p-methylstyrene, and p-ethylstyrene.

In Formula (3), R₄ preferably has from 3 to 10 carbons. Examples of the monomer capable of forming the constituent unit represented by Formula (3) include isopropyl (meth)acrylate, isobutyl (meth)acrylate, tert-butyl (meth)acrylate, and 2-ethylhexyl (meth)acrylate.

The content proportion of the monomer (b) is preferably from 20 mol% to 70 mol%, more preferably from 30 mol% to 70 mol%, and still more preferably from 40 mol% to 60 mol% relative to the entire monomer components constituting the copolymer. Adjusting the content proportion of the monomer (b) within this range makes it possible to form a hydrophobic moiety in the non-porous membrane and to easily form a water-conducting path, and the non-porous membrane has more excellent moisture permeability.

The thermoplastic resin has a cationic moiety or an anionic moiety. The thermoplastic resin may have a cationic moiety or an anionic moiety in the hydrophilic moiety and/or the hydrophobic moiety, or may have a cationic moiety or an anionic moiety in a portion other than these moieties. The thermoplastic resin preferably has a cationic moiety or an anionic moiety in the hydrophilic moiety, and the thermoplastic resin preferably has both a cationic moiety and an anionic moiety. The cationic moiety is preferably a cationic functional group or a group capable of forming a cationic functional group. The group capable of forming a cationic functional group refers to a group that does not have a cationic functional group at the stage of the thermoplastic resin but generates a cationic functional group at the stage of forming the non-porous membrane or at the time of using the non-porous membrane. The cationic functional group may be a zwitterionic functional group in which both a cation and an anion are present.

Examples of the cationic functional group include a nitrogen-containing group. Examples of the nitrogen-containing group include a group containing an ammonium ion or a group capable of forming an ammonium ion. Here, the group capable of forming an ammonium ion refers to a group that is not ionized at the stage of the thermoplastic resin but forms an ionized body at the stage of forming the non-porous membrane or at the time of using the non-porous membrane. Examples of the group containing an ammonium ion and the group capable of forming an ammonium ion include a primary amino group, a secondary amino group, a tertiary amino group, a quaternary ammonium group, an imino group (-NH- group and =NH group), an amidino group, an imidino group, a hydrazino group, an amide group, an imide group, and a cyclic group containing a nitrogen atom, such as a pyridyl group. Examples of the zwitterionic functional group include a quaternary ammonium-containing group. Examples of the quaternary ammonium-containing group include a betaine group and a phosphocholine group. Among them, in the thermoplastic resin, a group capable of generating an ammonium ion after formation of the non-porous membrane is preferred, and a group capable of generating a quaternary ammonium group (quaternary ammonium group, imide group) is more preferred, from the viewpoint of exhibiting antibacterial properties and preventing scattering of saprophytes from the non-porous membrane.

When the thermoplastic resin is the copolymer, the copolymer preferably contains a structural unit derived from a monomer having a cationic functional group in a side chain. Examples of the monomer having a cationic functional group include a monomer having the nitrogen-containing group described above as a functional group. Examples of the monomer having the nitrogen-containing group described above as a functional group include an amide group-containing monomer, an amino group-containing monomer, and an imide group-containing monomer. Examples of the amide group-containing monomer include N,N-dialkyl(meth)acrylamides such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(t-butyl)(meth)acrylamide; N-alkyl(meth)acrylamides such as N-ethyl(meth)acrylamide, N-isopropyl(meth)acrylamide, N-butyl(meth)acrylamide, and N-n-butyl(meth)acrylamide; N-vinylacetamide; N-hydroxyalkyl(meth)acrylamides such as N-(2-hydroxyethyl)(meth)acrylamide, N-(2-hydroxypropyl)(meth)acrylamide, N-(1-hydroxypropyl)(meth)acrylamide, N-(3-hydroxypropyl)(meth)acrylamide, N-(2-hydroxybutyl)(meth)acrylamide, N-(3-hydroxybutyl)(meth)acrylamide, and N-(4-hydroxybutyl)(meth)acrylamide; N-alkoxyalkyl(meth)acrylamides such as N-methoxymethyl(meth)acrylamide, N-methoxyethyl(meth)acrylamide, and N-butoxymethyl(meth)acrylamide; N,N-dimethylaminopropyl(meth)acrylamide; and N-(meth)acryloylmorpholine. Examples of the amino group-containing monomer include substituted or unsubstituted amino group-containing (meth)acrylates such as aminoethyl (meth)acrylate, N,N-dimethylaminoethyl (meth)acrylate, and t-butylaminoethyl (meth)acrylate. Examples of the imide group-containing monomer include N-(meth)acryloyloxymethylenesuccinimide, N-(meth)acryloyl-6-oxyhexamethylenesuccinimide, N-(meth)acryloyl-8-oxyhexamethylenesuccinimide, N-cyclohexylmaleimide, N-isopropylmaleimide, N-laurylmaleimide, N-phenylmaleimide, N-methylitaconimide, N-ethylitaconimide, N-butylitaconimide, N-octylitaconimide, N-2-ethylhexylitaconimide, N-cyclohexylitaconimide, and N-laurylitaconimide. One type of the aforementioned monomers having a cationic functional group may be used alone, or two or more types thereof may be used in combination.

The content proportion of the monomer having a cationic functional group is preferably from 0.5 mol% to 10 mol%, more preferably from 1 mol% to 7 mol%, and still more preferably from 2 mol% to 5 mol% relative to the entire monomer components constituting the copolymer. Adjusting the content proportion of the monomer having a cationic functional group within this range makes it possible to exhibit a repulsive force with the scale component, and adhesion and deposition of the scale component onto the non-porous membrane can be suppressed.

The anionic moiety is preferably an anionic functional group. Examples of the anionic functional group include anionic groups such as a carboxyl group, a sulfone group, and a phosphate group.

When the thermoplastic resin is the copolymer, the copolymer preferably contains a structural unit derived from a monomer having an anionic functional group in a side chain. Examples of the monomer having an anionic functional group include the above-described monomers having an anionic functional group. Examples of the monomer having an anionic functional group include a carboxyl-containing monomer, a sulfone group-containing monomer, and a phosphate group-containing monomer.

The content proportion of the monomer having an anionic functional group is preferably from 0.5 mol% to 10 mol%, more preferably from 1 mol% to 7 mol%, and still more preferably from 2 mol% to 5 mol% relative to the entire monomer components constituting the copolymer. Adjusting the content proportion of the monomer having an anionic functional group within this range makes it possible to exhibit a repulsive force with the scale component, and adhesion and deposition of the scale component onto the non-porous membrane can be suppressed.

The copolymer may contain a structural portion derived from a crosslinking agent. The crosslinking agent is not particularly limited as long as it is a compound capable of crosslinking with the side chain of the monomer constituting the copolymer. For example, a bifunctional compound having two reactive functional groups is preferred, and a crosslinking agent having three or more functional groups may be used from the viewpoint of increasing the range of the density of crosslinking in the polymer and adjusting the mechanical properties. Examples of the crosslinking agent include epoxy group-containing compounds having two or more functional groups, and isocyanate group-containing compounds having two or more functional groups. In the copolymer described above, the crosslinking agent particularly preferably contains an epoxy group-containing compound having two or more functional groups, from the viewpoint that a quaternary ammonium ion can be generated after crosslinking reaction with a functional group formed in a side chain.

Examples of the epoxy group-containing compound include bisphenol A and epichlorohydrin-type epoxy compounds, polyethylene glycol diglycidyl ether, glycerin diglycidyl ether, glycerin triglycidyl ether, 1,6-hexanediol diglycidyl ether, trimethylolpropane triglycidyl ether, diglycidylaniline, N,N,N',N'-tetraglycidyl-m-xylenediamine (for example, trade name "TETRAD-X", available from Mitsubishi Gas Chemical Company), and 1,3-bis(N,N-diglycidylaminomethyl)cyclohexane (for example, trade name "TETRAD-C", available from Mitsubishi Gas Chemical Company).

The amount of the crosslinking agent to be used is preferably from 1 part by mole to 60 parts by mole, more preferably from 2 parts by mole to 30 parts by mole, and still more preferably from 4 parts by mole to 15 parts by mole, relative to the total amount (100 parts by mole) of the side chains capable of reacting in the copolymer. Adjusting the amount of the crosslinking agent to be used within this range makes it possible to easily form a water-conducting path in the non-porous membrane, and the non-porous membrane is easily provided with excellent moisture permeability.

The weight average molecular weight of the thermoplastic resin is not particularly limited, but is preferably from 20000 to 2000000, more preferably from 30000 to 1500000, still more preferably from 50000 to 1000000, and particularly preferably from 70000 to 500000. The weight average molecular weight refers to a value measured by gel permeation chromatography (GPC) and calculated in terms of polystyrene.

### (Additional component)

The non-porous membrane may contain an additional component other than the thermoplastic resin, as long as the effects of the laminate for humidification of the present disclosure are not impaired.

The moisture-permeable layer preferably contains a preservative as the additional component. The preservative to be used may be a known antifungal agent, antibacterial agent, or the like. The average particle size of the preservative is preferably larger than the thickness of the moisture-permeable layer from the viewpoint of allowing the preservative to function as an anti-blocking agent, and may be smaller than the thickness of the moisture-permeable layer from the viewpoint of preventing the preservative from falling off the moisture-permeable layer. One type of the aforementioned preservatives may be used alone, or two or more types thereof may be used in combination.

The content of the preservative is preferably from 0.1 parts by mass to 10 parts by mass, more preferably from 0.15 parts by mass to 3 parts by mass, and particularly preferably from 0.2 parts by mass to 2 parts by mass, relative to the entire amount (100 parts by mass) of the copolymer. When the content of the preservative is within the above range, it is possible to exhibit sufficient antibacterial properties and suppress deterioration of the performance of the non-porous membrane due to bacteria, and it becomes easy for the laminate for humidification to exhibit its effects for a long period of time.

The non-porous membrane preferably contains an anti-blocking agent. Incorporation of the anti-blocking agent makes it possible to easily reduce the water contact angle of the non-porous membrane and to easily suppress blocking with the porous reinforcing material that comes into contact with the non-porous membrane when the laminate is stored in the form of a wound body. In addition, blocking can be easily suppressed even when the non-porous membranes come into contact with each other.

The average particle size of the anti-blocking agent is preferably from 0.5 µm to 5 µm, more preferably from 1 µm to 4 µm, and particularly preferably from 1.5 µm to 3 µm.

The average particle size of the anti-blocking agent is preferably larger than the thickness of the non-porous membrane, more preferably larger by 0.1 µm to 3 µm, and particularly preferably larger by 0.3 µm to 2 µm. When the average particle size of the anti-blocking agent is larger than the thickness of the non-porous membrane, the non-porous membrane can be provided with irregularities, and thus the contact area when the membranes come into contact with each other can be reduced, resulting in suppression of adhesion therebetween. From the viewpoint of forming the non-porous membrane, the upper limit of the average particle size is preferably 3 µm or less.

The anti-blocking agent is preferably a fluorine-based, silica-based, or chitosan-based anti-blocking agent. The anti-blocking agent is preferably used in combination with a release agent described below. The use of the anti-blocking agent makes it possible to easily suppress blocking between the non-porous membrane and the porous reinforcing material. The anti-blocking agent is more preferably a silica-based or chitosan-based anti-blocking agent. One type of the aforementioned anti-blocking agents may be used alone, or two or more types thereof may be used in combination.

Examples of the fluorine-based anti-blocking agent include triperfluorooctyl phosphate and triperfluorododecyl phosphate. Examples of the silica-based anti-blocking agent include natural silica fine particles and synthetic silica fine particles. Examples of the chitosan-based anti-blocking agent include chitosan nanofibers.

The content of the anti-blocking agent is preferably from 0.1 parts by mass to 10 parts by mass, more preferably from 0.5 parts by mass to 5 parts by mass, and particularly preferably from 1 part by mass to 3 parts by mass, relative to the entire amount (100 parts by mass) of the copolymer. When the content of the anti-blocking agent is within the above-described range, it is easy to achieve both sufficient anti-blocking performance and moisture permeability.

The non-porous membrane may contain a release agent. Examples of the release agent include a silicone-based release agent. The release agent exhibits a release action in the non-porous membrane. In the present disclosure, the release action refers to a property of easy re-peeling after adhesion. The use of a material exhibiting the release action causes the non-porous membrane to have water repellency, and the non-porous membranes can be easily peeled off after contacting with each other.

Examples of the silicone-based release agent include dimethylpolysiloxane. The silicone-based release agent may be modified, and examples of the modified silicone include an amino-modified silicone, an epoxy-modified silicone, and a hydrophilic polyether-modified silicone. One type of the aforementioned release agents may be used alone, or two or more types thereof may be used in combination.

The content of the release agent is preferably from 0.1 parts by mass to 10 parts by mass, more preferably from 0.5 parts by mass to 5 parts by mass, and particularly preferably from 1 part by mass to 3 parts by mass relative to the entire amount (100 parts by mass) of the copolymer. When the content of the release agent is in the above-described range, it is easy to achieve both sufficient water repellency and moisture permeability.

The non-porous membrane may contain a leveling agent. One type of the aforementioned leveling agent may be used alone, or two or more types of leveling agents may be used in combination.

The content of the leveling agent is preferably from 0.1 parts by mass to 10 parts by mass, more preferably from 0.15 parts by mass to 3 parts by mass, and particularly preferably from 0.2 parts by mass to 2 parts by mass relative to the entire amount (100 parts by mass) of the copolymer. When the content of the leveling agent is within the above-described range, the non-porous membrane is easily formed.

The thickness of the non-porous membrane is not particularly limited, but is preferably from 0.5 µm to 5 µm, and more preferably from 1 µm to 4 µm. When the thickness is 0.5 µm or more, good membrane formability is achieved, leading to an improvement in gas barrier property. An increase in the thickness of the non-porous membrane tends to cause more excellent moisture permeability. This is presumed to be because of the high water content of the non-porous membrane. When the thickness is 5 µm or less, a thin membrane is readily formed, resulting in excellent economic efficiency.

Since the copolymer has a hydrophilic moiety and a hydrophobic moiety, the non-porous membrane has a structure in which the hydrophilic moiety and the hydrophobic moiety are phase-separated at the surface. The maximum diameter of the hydrophilic moiety at the surface of the non-porous membrane is preferably 50 nm or less, more preferably 20 nm or less. When the maximum diameter of the hydrophilic moiety is 50 nm or less, a substance having a size larger than 50 nm is less likely to pass through the non-porous membrane, and the non-porous membrane can be used as a barrier film that does not allow a substance (for example, virus) having a size of 50 nm or more to pass through. The diameter of the hydrophilic moiety is determined by the following method. The diameter of the hydrophilic moiety can be calculated as a circle-equivalent diameter by converting a portion having a high adsorption force (hydrophilic moiety) and a portion having a low adsorption force (hydrophobic moiety) into numerical values by an adhesion force using an adhesion force measurement mode of a scanning probe microscope (SPM) and processing the values with image analysis software. The maximum diameter corresponds to the largest diameter among the diameters (circle-equivalent diameters) of the hydrophilic moieties calculated as described above.

In the present disclosure, the structure in which the maximum diameter of the hydrophilic moiety is 50 nm or less does not substantially permeate a component having a size of 50 nm or more, and thus substantially permeates only water vapor. Thus, the pore of the non-porous membrane in the present disclosure excludes a pore having a size of 50 nm or less formed in the hydrophilic moiety. When the maximum diameter of the hydrophilic moiety is larger than 50 nm, there is a possibility that components other than water vapor are permeated. Thus, a membrane having a plurality of structures in which the maximum diameter of the hydrophilic moiety is larger than 50 nm is defined as a porous membrane.

The non-porous membrane is preferably a layer formed by coating. Coating enables the non-porous membrane to be easily formed, and scattering of scale components, saprophytes, and the like can be easily suppressed.

### Porous reinforcing material

The above-described porous reinforcing material is an element serving as a support for the non-porous membrane and preferably has excellent moisture permeability.

The material for forming the porous reinforcing material may be either a hydrophilic material or a hydrophobic material, but is preferably a hydrophobic material. When the hydrophobic material is used, the composition for forming the non-porous membrane does not penetrate into the porous reinforcing material at the time of applying the composition, and thus a lead base material is not required for preventing the composition from flowing off the surface of the porous reinforcing material opposite to the surface on which the coating film is formed.

Examples of the material for forming the porous reinforcing material include organic materials such as a polyolefin-based resin, a cellulose-based resin, a polycarbonate resin, a polyamide resin, a polyimide resin, a polyamideimide resin, and a fluorine-based resin; and inorganic materials such as metals, glasses, and ceramics. Among them, an organic material is preferred, and the organic material is particularly preferably a polyolefin-based resin, from the viewpoint that the non-porous membrane can be formed on the porous reinforcing material at a relatively low temperature, and from the viewpoint of excellent moisture permeability and water resistance. The aforementioned material may be in the form of fibers such as metal fibers or inorganic fibers. One type of the aforementioned materials for forming the porous reinforcing material may be used alone, or two or more types thereof may be used.

Examples of the porous reinforcing material include a resin porous membrane, an inorganic porous membrane, a metal porous membrane, and a fibrous base material.

The polyolefin-based resin is a polymer containing an olefin as an essential monomer component (including an olefin-based elastomer), that is, a polymer containing at least a constituent unit derived from an olefin in a molecule (in one molecule). The olefin is not particularly limited, and examples thereof include α-olefins such as ethylene, propylene, 1-butene, and 4-methyl-1-pentene.

Examples of the polyolefin-based resin include a polymer containing ethylene as an essential monomer component (polyethylene-based resin), a polymer containing propylene as an essential monomer component (polypropylene-based resin), an ionomer, and an amorphous cyclic olefin-based polymer.

The porosity of the porous reinforcing material is not particularly limited, but is preferably from 30 vol% to 90 vol%, more preferably from 40 vol% to 70 vol%. When the porosity is 30 vol% or more, the moisture permeability is further improved. When the porosity is 90 vol% or less, the performance for supporting the non-porous membrane is further improved.

The thickness of the porous reinforcing material is not particularly limited, but is preferably 5 µm or more, and more preferably 10 µm or more from the viewpoint of being able to sufficiently support the non-porous membrane. The thickness of the porous reinforcing material is preferably 50 µm or less, and more preferably 30 µm or less from the viewpoint of excellent moisture permeability and in consideration of economic efficiency.

The surface of the porous reinforcing material on which the non-porous membrane is provided (for example, the surface 11a illustrated in FIG. 1) is preferably subjected to a hydrophilization treatment from the viewpoint of facilitating formation of the non-porous membrane. In particular, when a hydrophobic material is used as the material for forming the porous reinforcing material, the hydrophilization treatment is preferably performed. Examples of the hydrophilization treatment include corona discharge treatment and plasma treatment. Such a hydrophilization treatment makes it possible to generate a carboxy group, a hydroxyl group, or a carbonyl group on the surface of the porous reinforcing material, and the composition for forming the non-porous membrane easily wets and spreads on the surface of the porous reinforcing material, thereby facilitating formation of the non-porous membrane. This also improves the adhesion between the porous reinforcing material and the non-porous membrane. When the porous reinforcing material formed of a hydrophobic base material is stored in the form of a wound body, one surface and the other surface of the porous reinforcing material are in contact with each other in the wound body. However, since one surface (hydrophilic surface) and the other surface (hydrophobic surface) are in contact with each other, blocking can be suppressed.

The surface tension of the surface of the porous reinforcing material on the side on which the non-porous membrane is formed is preferably from 35 dyn/cm to 55 dyn/cm, more preferably from 37 dyn/cm to 50 dyn/cm. When the surface tension is 35 dyn/cm or more, the composition for forming the non-porous membrane can be easily applied, and the non-porous membrane can be easily formed. When the surface tension is 55 dyn/cm or less, the composition for forming the non-porous membrane does not excessively wet or spread, and the non-porous membrane can be easily formed on the surface of the porous reinforcing material. When the surface of the porous reinforcing material is hydrophilized, the surface on which the non-porous membrane is to be formed is the hydrophilized surface.

The surface tension of the inside of the porous reinforcing material (i.e., the inside being the region where the non-porous membrane is not formed) is preferably less than 35 dyn/cm, more preferably 33 dyn/cm or less. When the surface tension is less than 35 dyn/cm, the composition for forming the non-porous membrane is prevented from penetrating to the inside of the porous reinforcing material, and the non-porous membrane can be easily formed on the surface of the porous reinforcing material. When the surface of the porous reinforcing material is subjected to a hydrophilization treatment, the inside of the porous reinforcing material corresponds to the region not subjected to the hydrophilization treatment. The surface tension of the inside can be determined by measuring the surface tension of a cross-section obtained by cutting the porous reinforcing material.

### Laminate for humidification

The moisture permeation rate of the laminate for humidification is preferably more than 1350 g/(m²· 24h), more preferably 1370 g/(m²·24h) or more, as determined in accordance with the moisture permeation test method (cup method) of JIS Z0208-1976, wherein the moisture permeation rate is determined by placing a moisture-permeable cup containing 40 g of water in a thermo-hygrostat under conditions of a temperature of 20°C, a relative humidity of 65%, and a wind velocity of 0.1 m/s, and converting a decrease in the total mass of the water and the moisture-permeable cup after the elapse of 1 hour into a mass of test piece per 1 m²·24 hours. Since the laminate for humidification has excellent moisture permeability, the moisture permeation rate thereof can be more than 1350 g/(m² ·24h).

The moisture permeation rate of the laminate for humidification is preferably more than 18000 g/(m²·24h), more preferably 19000 g/(m²·24h) or more, and still more preferably 20000 g/(m² 24h) or more, as determined in accordance with the moisture permeation test method (cup method) of JIS Z0208-1976, wherein the moisture permeation rate is determined by placing a moisture-permeable cup containing 40 g of water in a thermo-hygrostat under conditions of a temperature of 20°C, a relative humidity of 30%, and a wind velocity of 2.4 m/s, and converting a decrease in the total mass of the water and the moisture-permeable cup after the elapse of 1 hour into a mass of test piece per 1 m²·24 hours. Since the laminate for humidification has excellent moisture permeability, the moisture permeation rate thereof can be more than 18000 g/(m²·24h).

In the laminate for humidification, it is preferable that blocking is suppressed between the moisture-permeable layer and the porous reinforcing material when the sheet in a roll form is heated at 70°C for 15 hours and then pulled out by a hand. Since blocking is suppressed between the moisture-permeable layer and the porous reinforcing material, the laminate for humidification can be easily produced and stored in the form of a wound body.

The laminate for humidification is formed into two strips each having a size of 25 mm × 100 mm. Water is added dropwise to the non-porous membrane of one strip of the laminate for humidification, and then the non-porous membrane is bonded to the non-porous membrane of the other strip of the laminate for humidification, whereby the entire bonded surface is impregnated with water. When the bonded laminates for humidification are heated at 55°C for 1 hour and the peel strength is measured with Tensilon, the peel strength is preferably 4 N/25 mm or less, more preferably 2 N/25 mm or less, and still more preferably 0.5 N/25 mm or less. When the peel strength is 4 N/25 mm or less, even if the moisture-permeable layers come into contact with each other, the layers are easily peeled off again, and blocking is easily suppressed.

### Method for producing laminate for humidification

The laminate for humidification of the present disclosure can be produced by forming the non-porous membrane on at least one surface of the porous reinforcing material by a known or commonly used method. For example, the non-porous membrane may be directly formed on one surface of the porous reinforcing material. Alternatively, the non-porous membrane may be temporarily formed on another support, and then the non-porous membrane may be transferred (bonded) to one surface of the porous reinforcing material, to form the non-porous membrane on the porous reinforcing material. Among these methods, the former method is preferred from the viewpoint of excellent adhesion between the non-porous membrane and the porous reinforcing material.

The surface of the porous reinforcing material on the side where the non-porous membrane is to be provided may be subjected to a hydrophilization treatment. Examples of the hydrophilization treatment include those described above.

The non-porous membrane can be formed by applying (coating) a composition for forming the non-porous membrane on the porous reinforcing material or the other support, and then removing the solvent from the resultant coating membrane by heating or the like.

Since blocking is suppressed by subjecting the porous reinforcing material to the hydrophilization treatment, the laminate for humidification can be produced by a roll-to-roll process in which a non-porous membrane is formed on the porous reinforcing material produced preliminarily in the form of a wound body, and then the resultant laminate is brought into a wound body again.

The aforementioned composition can be produced by a known or commonly used method. For example, the composition can be produced by dissolving or dispersing the aforementioned copolymer in a solvent, and mixing the solution or the dispersion with an additive such as a preservative as necessary. The solvent is preferably water and/or a water-soluble solvent. When water or a water-soluble solvent is used, it is presumed that the copolymer is dispersed in the composition in a core-shell form including a hydrophobic moiety on the inner side and a hydrophilic moiety on the outer side. It is presumed that the use of such a composition makes it possible to phase-separate the hydrophilic moiety and the hydrophobic moiety to form a non-porous membrane in a state of having a water-conducting path when the coating film is dried, and the hydrophobic moieties are strongly bonded to each other, whereby the water resistance is further improved.

Examples of the water-soluble solvent include water-soluble aliphatic alcohols such as methanol, ethanol, n-propanol, and i-propanol; and glycol ethers such as ethylene glycol monomethyl ether, ethylene glycol monobutyl ether, propylene glycol monomethyl ether, and propylene glycol monoethyl ether. One type of the aforementioned water-soluble solvents may be used alone, or two or more types thereof may be used.

The proportion (concentration) of the copolymer in the composition in which the copolymer is dissolved or dispersed is not particularly limited, but is preferably from 0.5 to 5 mass%, more preferably from 1 to 4 mass%, and still more preferably from 1.5 to 3 mass%. When the concentration is 5 mass% or less, the thickness of the coating layer increases, and thus the thickness of the non-porous membrane after drying becomes more uniform. This makes it possible to form a non-porous membrane having excellent gas barrier properties and a further reduced thickness, resulting in further improved moisture permeability. In addition, when the concentration is within the above range, it is easy to form a non-porous membrane having excellent coating properties, moisture permeability, and gas barrier properties.

A known coating method may be used for the application (coating) of the composition. For example, a coater such as a gravure roll coater, a reverse roll coater, a kiss roll coater, a dip roll coater, a bar coater, a knife coater, a spray coater, a comma coater, or a direct coater may be used. The non-porous membrane is readily formed through such a coating method.

The heating temperature at the time of removing the solvent from the coating membrane is preferably from 35°C to 90°C, more preferably from 40°C to 85°C, and still more preferably from 45°C to 80°C. A proper time can be appropriately adopted for the heating, and the heating time is, for example, from 5 seconds to 20 minutes, preferably from 5 seconds to 10 minutes, and more preferably from 10 seconds to 5 minutes. Since the non-porous membrane can be formed at a low temperature of 90°C or lower (in particular, 80°C or lower) using the composition, the membrane is easily formed, and a polyolefin-based resin having excellent moisture permeability can be used as the porous reinforcing material.

The laminate for humidification in which the non-porous membrane is formed on at least one surface of the porous reinforcing material by the above-described method has low air permeability and excellent moisture permeability. The laminate for humidification means a laminate capable of transferring water vapor through the laminate for humidification. Thus, the laminate for humidification can be preferably used for products requiring such a function, for example, moisture-permeable membrane-type humidifiers, total heat exchangers, clothing inners, disposable water-repellent and moisture-permeable materials, and applications for dehydration without exposure to air or bacteria (e.g., filters for storing aged meat). Since the laminate for humidification has a structure in which a hydrophilic moiety and a hydrophobic moiety are phase-separated, the laminate for humidification can also be used as a barrier film having moisture permeability. When the diameter of the hydrophilic moiety is small, the barrier film having moisture permeability allows a small hydrophilic substance (for example, water vapor) to pass through the hydrophilic moiety and prevents a large substance (for example, virus) from passing through the hydrophilic moiety, and thus these substances can be separated from each other.

### Bag-shaped water-holding container

A bag-shaped water-holding container can be produced by covering the outside of a frame with the laminate for humidification.

The frame is preferably made of a rigid material, such as a resin, a metal, or an alloy material. The frame may be a plate-like or bag-shaped frame formed by extrusion molding, a plate-like frame formed by injection molding, or a bag-shaped structure formed by bonding two or more plate-like frames. A hole may be provided after production of the bag-shaped frame, or a frame provided with a hole in advance may be produced.

It is preferable that a part or the whole of a contact portion between the laminate and the frame is bonded. The method for bonding of the laminate to the frame is not particularly limited, and the bonding can be performed by an adhesion method using a known or commonly used adhesive, or a fusion method such as ultrasonic fusion, high-frequency fusion, or thermal fusion.

The bag-shaped water-holding container can be produced by the above-described method. In the bag-shaped water-holding container, the laminate is disposed on the outer side of the frame structure. Thus, liquid water passing through the bag-shaped water-holding container is absorbed in the form of water vapor by the laminate and is diffused in the laminate, and the water vapor can be released from the entire laminate.

A humidifier can be produced by mounting a plurality of the bag-shaped water-holding containers. Since such a humidifier has improved humidification performance as compared with known humidifiers, the humidifier can be reduced in size and can exhibit the comparable performance, and is also excellent in cost.

Since the humidifier includes the laminate for humidification, the humidifier can maintain performance for a long period of time while suppressing scattering of saprophytes, scale components, and the like. Thus, the humidifier can be suitably used for applications such as an air conditioner, a ventilator, and an air purifier.

Each aspect disclosed in the present specification can be combined with any other feature disclosed herein. Each of the configurations, combinations thereof, or the like in each embodiment are an example, and additions, omissions, replacements, and other changes of the configurations may be made as appropriate without departing from the spirit of the present disclosure. In addition, each aspect of the invention according to the present disclosure is not limited by the embodiments or the following examples but is limited only by the claims.

### Examples

An embodiment of the present disclosure will be described in detail below with reference to Examples.

### Example 1

A coating liquid having a resin concentration of 10 mass% was prepared by diluting 100 parts by mass of a thermoplastic resin solution A with 22 parts by mass of ethanol and 143 parts by mass of distilled water, the solution A containing 47 parts by mole of isobutyl acrylate and 1 part by mole of styrene as constituent units that form a hydrophobic moiety in a polymer, 21 parts by mole of acrylic acid and 28 parts by mole of methyl acrylate as constituent units that form a hydrophilic moiety, 3 parts by mole of an imide as a constituent unit that forms a cationic moiety, and 2 parts by mole of an epoxy compound as a crosslinking agent. Meanwhile, one surface of a polypropylene resin-made porous base material (thickness: 20 µm, porosity: 48 vol%) was subjected to a corona treatment to form a hydrophilic surface having a surface tension of 39 dyn. Then, the aforementioned composition was applied to the hydrophilic surface of the porous reinforcing material using a wire bar and heated at 70°C for 1 minute to form a non-porous membrane (thickness: 1 µm). Thus, a laminate for humidification of Example 1 was produced.

### Examples 2 to 5

A laminate for humidification was produced in the same manner as in Example 1, except that the components marked with ∘ were added as shown in Table 2 to prepare a coating liquid.

Details of the respective components in Table 2 other than those described above are described below.
Silica fine particle A: trade name "SYLYSIA 300" available from Fuji Silysia Chemical Ltd., average particle size: 1.7 µm
Silica fine particle B: trade name "MP-4540M", available from Nissan Chemical Corporation, average particle size: 0.45 µm
Silicone: trade name "X-51-1264", available from Shin-Etsu Chemical Co., Ltd.
Chitosan: trade name "EFo-08002", available from Sugino Machine Ltd.

### Evaluation

Each of the laminates for humidification produced in Examples and Comparative Examples was evaluated as follows. The evaluation results are shown in the tables. In the tables, "-" indicates that the evaluation was not performed or the evaluation was not able to be performed. The polypropylene-based resin porous base material itself on which the non-porous membrane was not formed was evaluated as the laminate of Comparative Example 1.

### (1) Moisture permeation rate

The moisture permeation rate of the laminate for humidification produced in each of Examples and Comparative Examples was measured in accordance with the moisture permeation test method (cup method) of JIS Z0208-1976. Specifically, the laminate for humidification produced in each of Examples and Comparative Examples was allowed to stand in a measurement environment for 2 hours or more, and then the moisture-permeable cup was covered with the laminate as a moisture-permeable sheet in an airtight manner. Then, the moisture-permeable cup containing 40 g of water was placed in a thermo-hygrostat at a temperature of 20°C, a relative humidity of 30%, and a wind velocity of 2.4 m/s, and a decrease in the total mass of the water and the moisture-permeable cup after the elapse of 1 hour was converted into a mass of test piece per 1 m²·24 hours and calculated as the moisture permeation rate. Similarly, the moisture permeation rate was also measured at a temperature of 20°C and a relative humidity of 65% in a state of substantially no wind (wind velocity 0.1 m/s).

### (2) Anti-blocking property

### Evaluation in roll form

The sheet of the laminate for humidification in a roll form was heated at 70°C for 15 hours. Thereafter, the sheet was pulled out by a hand, and the blocking property was evaluated as follows.
High: The sheet was not able to be pulled out.
Medium: The sheet was deformed after the sheet was pulled out.
Low: The sheet was not deformed at all after the sheet was pulled out.

### Evaluation in sheet form

The laminate for humidification was prepared into two strip samples each having a size of 25 mm × 100 mm. Water was added dropwise to the non-porous membrane of one sample, and then the non-porous membrane was bonded to the non-porous membrane of the laminate for humidification, whereby the entire bonded surface was impregnated with water. The bonded sample was heated at 55°C for 1 hour and the peel strength was measured with Tensilon.

### (3) Scale deposition test

The laminate for humidification was cut into a circular sample having a diameter of 7 cm, and 7 ml of hardness-adjusted water (Ca hardness: 1435 mg/L) was added dropwise to the non-porous membrane side of the sample, followed by drying at 60°C for 4 hours. The non-porous membrane side of the resultant scale deposition sample was immersed in pure water for 15 minutes for washing, and then dried at 60°C for 30 minutes. After the drying, the presence or absence of scale deposition on the surface of the non-porous membrane was determined by SEM.

### [Table 1]

**Table 1**

| | Non-porous membrane | Porous reinforcing material | Thickness of non-porous membrane | Thickness of porous reinforcing material | Moisture permeation rate 20°C 30% wind velocity 2.4 m/s | Moisture permeation rate 20°C 65% wind velocity 0.1 m/s | Scale deposition |
|---|---|---|---|---|---|---|---|
| | | | µm | µm | g/m²·24hr | g/m²·24hr | Presence/ absence |
| Example 1 | Thermoplastic resin solution A | PP | 1 | 20 | 20500 | 1390 | Absence |
| Comparative Example 1 | - | PP | - | 20 | 18000 | 1350 | Presence |

### [Table 2]

**Table 2**

| | | Example | | | | |
|---|---|---|---|---|---|---|
| | | 1 | 2 | 3 | 4 | 5 |
| Silica fine particle A | | - | ○ | - | - | - |
| Silica fine particle B | | - | - | ○ | - | - |
| Silicone | | - | ○ | ○ | ○ | - |
| Chitosan | | - | - | - | - | ○ |
| Roll form (sheet porous base material-moisture permeable layer) | Sensory evaluation high/medium/low | High | Low | Medium | High | Low |
| Sheet form (moisture permeable layer-moisture permeable layer) | Peel strength N/25 mm | 3.3 | 0.1 | 1.5 | 3.8 | 0.1 |

As shown in the evaluation results of Example 1, the laminate for humidification of the present disclosure had sufficient moisture permeability and suppressed the deposition of scale components. In contrast, when the non-porous membrane was not formed as in Comparative Example 1, scale components were deposited. The results indicated that the non-porous membrane including a cationic moiety can suppress the deposition of scale components, and thus can maintain the moisture permeability for a long period of time. As shown in Examples 1 to 5, the moisture-permeable membranes were less likely to adhere to each other. The results suggested that even in a humidifier of moisture-permeable membrane type capable of suppressing the scattering of impurities, deterioration of moisture permeability due to the adhesion between the moisture-permeable membranes does not occur, and sufficient moisture permeability is maintained over a long period of time.

Hereinafter, variations of the invention according to the present disclosure will be described.

### [Appendix 1]

A laminate for humidification, the laminate including a porous reinforcing material, and a non-porous membrane that is laminated on at least one surface of the porous reinforcing material and functions as a non-porous membrane, wherein the non-porous membrane contains a thermoplastic resin including a cationic moiety or an anionic moiety.

### [Appendix 2]

The laminate for humidification according to Appendix 1, wherein the non-porous membrane is disposed on a liquid water side of the porous reinforcing material and is used to absorb liquid water and release the liquid water into air.

### [Appendix 3]

The laminate for humidification according to Appendix 1 or 2, wherein the cationic moiety contains a group containing an ammonium ion or a group capable of forming an ammonium ion.

### [Appendix 4]

The laminate for humidification according to any one of Appendices 1 to 3, wherein the thermoplastic resin has a hydrophilic moiety, and the hydrophilic moiety contains a constituent unit represented by Formula (1) described below: 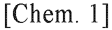 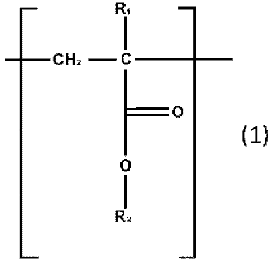 (wherein R₁ and R₂ independently represent a hydrogen atom or a methyl group).

### [Appendix 5]

The laminate for humidification according to any one of Appendices 1 to 4, wherein the thermoplastic resin has a hydrophobic moiety, and the hydrophobic moiety contains a constituent unit represented by Formula (2) and/or Formula (3) described below: 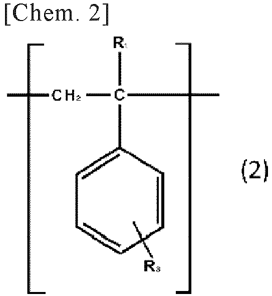 (wherein R₁ represents a hydrogen atom or a methyl group, and R₃ represents a hydrogen atom or an alkyl group having from 1 to 2 carbons) 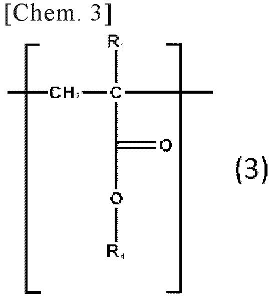 (wherein R₁ represents a hydrogen atom or a methyl group, and R₄ represents a branched alkyl group having 3 or more carbons).

### [Appendix 6]

The laminate for humidification according to any one of Appendices 1 to 5, wherein the non-porous membrane contains a preservative.

### [Appendix 7]

The laminate for humidification according to Appendix 6, wherein the preservative has an average particle size larger than a thickness of the non-porous membrane.

### [Appendix 8]

The laminate for humidification according to any one of Appendices 1 to 7, wherein the non-porous membrane contains an anti-blocking agent.

### [Appendix 9]

The laminate for humidification according to Appendix 8, wherein the anti-blocking agent has an average particle size larger than the thickness of the non-porous membrane.

### [Appendix 10]

The laminate for humidification according to any one of Appendices 1 to 9, wherein the non-porous membrane contains a leveling agent.

### [Appendix 11]

The laminate for humidification according to any one of Appendices 1 to 10, wherein the non-porous membrane is coated to cover at least one surface of the porous reinforcing material.

### [Appendix 12]

A humidifier including a plurality of bag-shaped water-holding containers each including the laminate for humidification described in Appendix 11 and a frame which are bonded together.

### [Appendix 13]

An air conditioner including the humidifier described in Appendix 12.

### [Appendix 14]

A ventilator including the humidifier described in Appendix 12.

### [Appendix 15]

An air purifier including the humidifier described in Appendix 12.

### Reference Signs List

1 Laminate
11 Porous reinforcing material
11a One surface of porous reinforcing material
12 Non-porous membrane

## Claims

1. A laminate for humidification, the laminate comprising a porous reinforcing material, and a non-porous membrane that is laminated on at least one surface of the porous reinforcing material and functions as a moisture-permeable membrane, wherein the non-porous membrane contains a thermoplastic resin including a cationic moiety or an anionic moiety.

2. The laminate for humidification according to claim 1, wherein the non-porous membrane is disposed on a liquid water side of the porous reinforcing material and is used to absorb liquid water and release the liquid water into air.

3. The laminate for humidification according to claim 1 or 2, wherein the cationic moiety contains a group containing an ammonium ion or a group capable of forming an ammonium ion.

4. The laminate for humidification according to claim 1 or 2, wherein the thermoplastic resin includes a hydrophilic moiety, and the hydrophilic moiety contains a constituent unit represented by Formula (1): 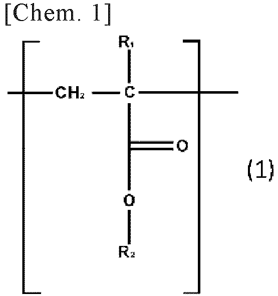 wherein R₁ and R₂ independently represent a hydrogen atom or a methyl group.

5. The laminate for humidification according to claim 1 or 2, wherein the thermoplastic resin includes a hydrophobic moiety, and the hydrophobic moiety contains a constituent unit represented by Formula (2) and/or Formula (3): 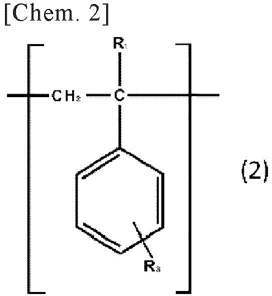 wherein R₁ represents a hydrogen atom or a methyl group, and R₃ represents a hydrogen atom or an alkyl group having from 1 to 2 carbons, and 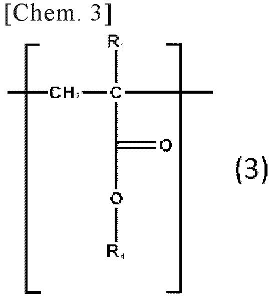 wherein R₁ represents a hydrogen atom or a methyl group, and R₄ represents a branched alkyl group having 3 or more carbons.

6. The laminate for humidification according to claim 1 or 2, wherein the non-porous membrane contains a preservative.

7. The laminate for humidification according to claim 6, wherein the preservative has an average particle size larger than a thickness of the non-porous membrane.

8. The laminate for humidification according to claim 1 or 2, wherein the non-porous membrane contains an anti-blocking agent.

9. The laminate for humidification according to claim 7, wherein the anti-blocking agent has an average particle size larger than the thickness of the non-porous membrane.

10. The laminate for humidification according to claim 1 or 2, wherein the non-porous membrane contains a leveling agent.

11. The laminate for humidification according to claim 1 or 2, wherein the non-porous membrane is coated to cover at least one surface of the porous reinforcing material.

12. A humidifier comprising a plurality of bag-shaped water-holding containers each including the laminate for humidification described in claim 11 and a frame, the laminate and the frame being bonded together.

13. An air conditioner comprising the humidifier described in claim 12.

14. A ventilator comprising the humidifier described in claim 12.

15. An air purifier comprising the humidifier described in claim 12.
